# EUROPEAN PATENT APPLICATION

(11) **EP 4 228 351 A1**
(43) Date of publication of application: **16.08.2023**
(21) Application number: 20956696.7
(22) Date of filing: 06.10.2020
(51) Int. Cl.: H04W 72/04, H04W 68/00, H04W 52/02

(54) **TERMINAL, BASE STATION, AND PAGING METHOD**

(71) Applicant: NTT DOCOMO, INC., Tokyo 100-6150 (JP)
(72) Inventor: OHARA, Tomoya, Tokyo 100-6150 (JP)
(74) Representative: Hoffmann Eitle
(86) International application number: PCT/JP2020/037921
(87) International publication number: WO 2022/074748

(57) **Abstract**

Provided is a terminal including a receiving unit that receives notification indicating whether or not a reference signal is available to perform paging monitoring in paging occasion from a base station; and a control unit that performs the paging monitoring on the basis of the notification.

## Description

### [Technical Field]

The present invention relates to a terminal and a base station in a radio communication system.

### BACKGROUND ART

In 3rd generation partnership project (3GPP), an examination of a radio communication scheme called 5G or new radio (NR) (hereinafter, the radio communication scheme will be referred to as "NR") is in progress to realize a further increase in a system capacity, a further increase in a data transmission speed, a further reduction in delay in a radio section, and the like. In the NR, various radio technologies and network architectures have been examined to satisfy a requirement that delay of a wireless section is set to 1 ms or less while realizing a throughput of 10 Gbps or greater.

Even in NR, paging is performed to call a terminal in a standby area when an incoming call arrives as in LTE. In the NR, a terminal in an RRC_IDLE state or an RRC_INACTIVE state performs an intermittent reception operation for power saving in order to monitor a paging DCI (Non-Patent Document 1). In the intermittent reception operation, a period in which a terminal wakes up from a sleep state and performs paging monitoring is referred to as paging occasion (PO). Hereinafter, a terminal in the RRC_IDLE state or the RRC_INACTIVE state may be referred to as an idle/inactive mode UE.

### CITATION LIST

### NON-PATENT DOCUMENT

Non-Patent Document 1: 3GPP TS 38.304 V16.1.0

### (2020-07)

### SUMMARY OF THE INVENTION

### PROBLEM TO BE SOLVED BY THE INVENTION

When the idle/inactive mode UE in the NR performs the paging monitoring in the paging occasion (PO), since time/frequency tracking, auto gain control (AGC), or the like is performed in advance, it is necessary to perform reception processing of a plurality of synchronization signal blocks (SSB).

However, for example, in comparison to a cellspecific reference signal (CRS) in LTE, the SSB is transmitted at a relatively long cycle, it is necessary for the terminal to wake up early in comparison to PO reception timing for the SSB reception processing. Accordingly, it is difficult to secure long time sleep, and this leads to an increase in terminal power consumption.

It is also considered to use a tracking reference signal (TRS) or a channel state information reference signal (CSI-RS) other than the SSB for the paging monitoring. Hereinafter, the TRS or the CSI-RS is noted as TRS/CSI-RS.

However, in the terminal (idle/inactive mode UE), since it is unclear whether or not the TRS or the CSI-RS is transmitted from a base station, it is necessary to wake up at early as in the case of using only the SSB. Accordingly, it is difficult to secure long time sleep, and this leads to an increase in terminal power consumption.

The invention has been made in consideration such circumstances, and an object thereof is to provide a technology capable of reducing terminal power consumption in paging monitoring.

### MEANS FOR SOLVING PROBLEM

According to the technology of the present disclosure, there is provided a terminal including: a receiving unit that receives a notification indicating whether or not a reference signal is available in order to perform paging monitoring in paging occasion from a base station; and a control unit that performs paging monitoring on the basis of the notification.

### EFFECT OF THE INVENTION

According to the technology of the present disclosure, there is provided a technology capable of reducing terminal power consumption in paging monitoring.

### BRIEF DESCRIPTION OF DRAWINGS

[Fig.1] Fig. 1 is a view for describing a radio communication system in an embodiment of the invention;
[Fig.2] Fig. 2 is a view for describing a radio communication system in the embodiment of the invention;
[Fig.3] Fig. 3 is a view illustrating an operation example for paging monitoring;
[Fig.4] Fig. 4 is a view illustrating an operation example for paging monitoring;
[Fig.5] Fig. 5 is a view for describing Example 1;
[Fig.6] Fig. 6 is a view for describing Example 1;
[Fig.7] Fig. 7 is a view for describing Example 2;
[Fig.8] Fig. 8 is a view for describing Example 2;
[Fig.9] Fig. 9 is a view for describing Example 2;
[Fig.10] Fig. 10 is a view for describing Example 3;
[Fig.11] Fig. 11 is a view for describing Example 3;
[Fig.12] Fig. 12 is a view illustrating an example of a functional configuration of a base station 10 in the embodiment of the invention;
[Fig.13] Fig. 13 is a view illustrating an example of a functional configuration of a terminal 20 in the embodiment of the invention; and

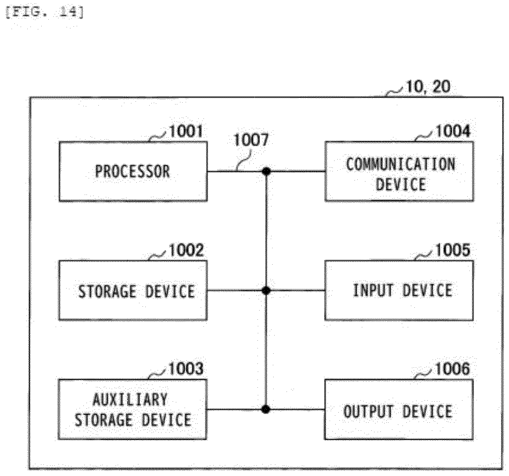

[Fig.14] Fig. 14 is a view illustrating an example of a hardware configuration of the base station 10 or the terminal 20 in the embodiment of the invention.

### MODE(S) FOR CARRYING OUT THE INVENTION

Hereinafter, embodiments of the invention will be described with reference to the accompanying drawings. Note that, the following embodiments are illustrative only, and embodiments to which the invention is applied are not limited to the following embodiments.

In an operation of a radio communication system of embodiments of the invention, an existing technology is appropriately used. For example, the existing technology is existing NR, but there is no limitation to the existing NR.

In addition, in this specification, terminologies such as a PUSCH, a PDCCH, an RRC, a MAC, and a DCI which are used in specifications of existing NR or LTE are used, but terminologies expressed as a channel name, a protocol name, a signal name, a function name, and the like which are used in this specification may be called by other names.

### (System Configuration)

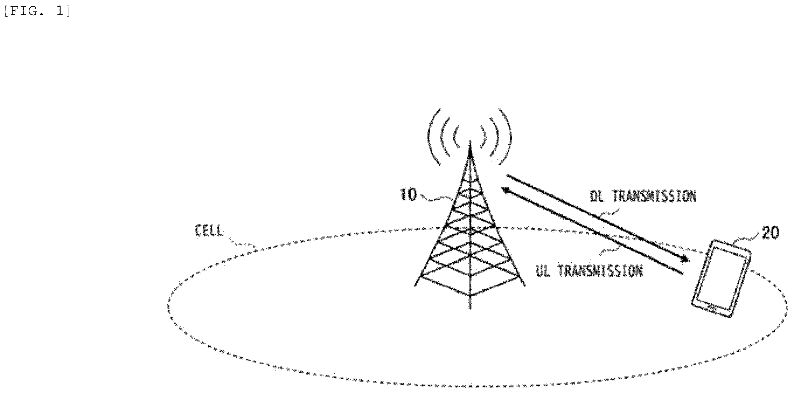

Fig. 1 is a view for describing a radio communication system in an embodiment of the invention. As illustrated in Fig. 1, the radio communication system in the embodiment of the invention includes a base station 10 and a terminal 20. In Fig. 1, one piece of the base station 10 and one piece of the terminal 20 are illustrated, but this is an example, and a plurality of the base stations 10 and a plurality of the terminals 20 may be provided.

The base station 10 is a communication device that provides one or more cells, and performs radio communication with the terminal 20. A physical resource of a radio signal is defined by a time domain and a frequency domain, the time domain may be defined by the number of OFDM symbols, and the frequency domain may be defined by the number of sub-carriers and the number of resource blocks. In addition, a transmission time interval (TTI) in the time domain may be a slot, and the TTI may be a subframe.

The base station 10 transmits a synchronization signal, system information, and the like to the terminal 20. Examples of the synchronization signal include NR-PSS and NR-SSS. For example, the system information is transmitted with an NR-PBCH or a PDSCH and is also referred to as broadcast information. As illustrated in Fig. 1, the base station 10 transmits a control signal or data to the terminal 20 with a downlink (DL), and receives the control signal or the data from the terminal 20 with an uplink (UL). Note that, here, something transmitted with a control channel such as a PUCCH and the PDCCH is called a control signal, and something transmitted with a share channel such as the PUSCH and the PDSCH is called data, but the calling method is an example.

The terminal 20 is a communication device such as a smart phone, a portable telephone, a tablet, a wearable terminal, and a communication module for machine-to-machine (M2M) which have a radio communication function. As illustrated in Fig. 1, the terminal 20 receives a control signal or data from the base station 10 with the DL and transmits the control signal or the data to the base station 10 with the UL to use various communication services provided by the radio communication system. Note that, the terminal 20 may be referred to as UE and the base station 10 may be referred to as gNB.

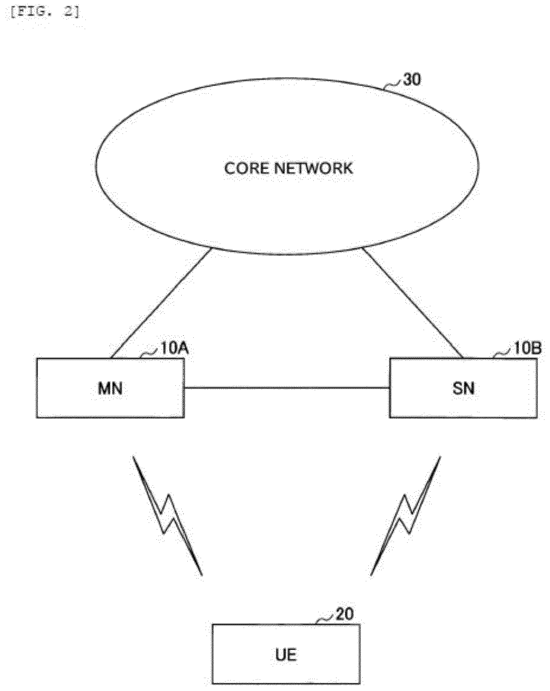

Fig. 2 illustrates a configuration example of the radio communication system in a case where dual connectivity (DC) is executed. As illustrated in Fig. 2, a base station 10A that becomes a master node (MN) and a base station 10B that becomes a secondary node (SN) may be provided. The base station 10A and the base station 10B are respectively connected to a core network. The terminal 20 can perform communication with both the base station 10A and the base station 10B.

A cell group provided by the base station 10A that is the MN is referred to as a master cell group (MCG) and a cell group provided by the base station 10B that is SN is referred to as a secondary cell group (SCG).

A processing operation in this embodiment may be executed by the system configuration illustrated in Fig. 1, may be executed by the system configuration illustrated in Fig. 2, or may be executed by a system configuration other than the system configurations.

### (Basic Operation Example)

Even in NR, paging is performed to call a terminal in a standby area when an incoming call arrives as in LTE. In the NR, the terminal 20 (idle/inactive mode UE) performs an intermittent (discontinuous) reception operation for power saving in order to monitor a paging DCI (Non-Patent Document 1). In the intermittent reception operation, a period in which the terminal 20 wakes up from a sleep state and performs paging monitoring is referred to as paging occasion (PO).

For example, the terminal 20 monitors one PO per 1 DRX cycling. For example, the PO is constituted by a plurality of slots.

As described above, when the idle/inactive mode UE in the NR performs the paging monitoring in the paging occasion (PO), since time/frequency tracking, auto gain control (AGC), or the like is performed in advance, it is necessary to perform reception processing of a plurality of synchronization signal blocks (SSB). Note that, the number of the SSBs which are received in advance is different depending on reception quality.

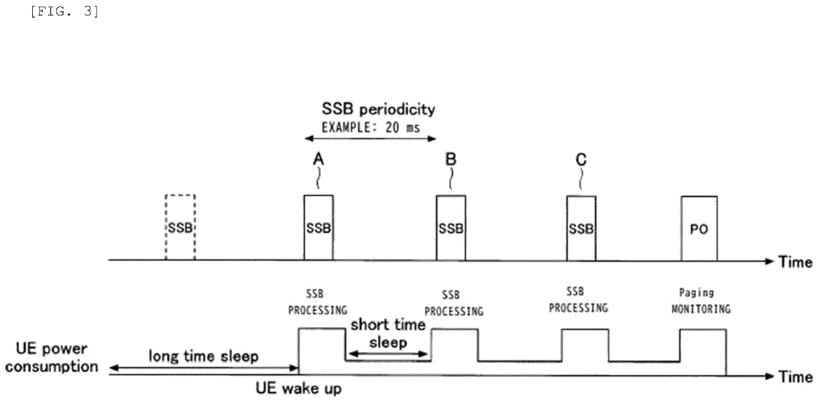

An operation example of the terminal 20 in a case of performing SSB reception before the PO will be described with reference to Fig. 3. In Fig. 3, an upper side represents an SSB reception operation, and a lower side represents power consumption of the terminal 20.

Fig. 3 illustrates an example in a case where a cycle of the SSB is 20 ms, and three SSBs are received before the PO as an example. The terminal 20 sleeps long time before SSB timing indicated by A, and wakes up at the SSB timing indicated by A. After receiving the SSB indicated by A, the terminal 20 sleeps, but partial circuits are activated due to short time sleep, and thus power consumption occurs. At timing of B or C, SSB reception is performed and paging monitoring is performed at the PO in a similar manner.

### (With Regard to Problem)

However, the SSB is transmitted at a relatively long cycle, it is necessary for the terminal 20 to wake up early in comparison to PO reception timing for the SSB reception processing. Accordingly, it is difficult to secure long time sleep, and this leads to an increase in terminal power consumption. In the example in Fig. 3, the long time sleep is to be terminated before the PO by 60 ms.

As described above, it is also considered to use a TRS/CSI-RS that is a reference signal transmitted at a shorter cycle in comparison to the SSB for the paging monitoring in addition to the SSB or instead of the SSB. That is, it is considered to perform time/frequency tracking and auto gain control (AGC), or the like by using the TRS/CSI-RS.

However, the TRS/CSI-RS is a reference signal to be used by the terminal 20 (connected mode UE) in the RRC connection state, and it cannot be said that the TRS/CSI-RS is always transmitted in a cell (or beam) in which the terminal 20 resides. For example, in a case where there is no connected mode UE connected in the beam in the cell, the base station 10 determines that it is not necessary to transmit the TRS/CSI-RS, and the TRS/CSI-RS may be controlled not to be transmitted.

In a case where whether or not the TRS/CSI-RS is transmitted is not clear, the terminal 20 cannot determine that it is sufficient to wake up at which timing in advance. Accordingly, as in the case of using the SSB illustrated in Fig. 3, it is necessary to wake up before time longer than the PO, and power consumption increases.

### (Operation Example in Case of Using TRS/CSI-RS)

Hereinafter, an operation example for solving the problem will be described. In this embodiment, basically, information enabling the terminal 20 to use the TRS/CSI-RS for paging monitoring in the PO is transmitted from the base station 10 to the terminal 20. Note that, in this embodiment, as a reference signal that is used for the paging monitoring, the TRS/CSI-RS is exemplified, but this is illustrative only, and a reference signal other than the TRS/CSI-RS may be used.

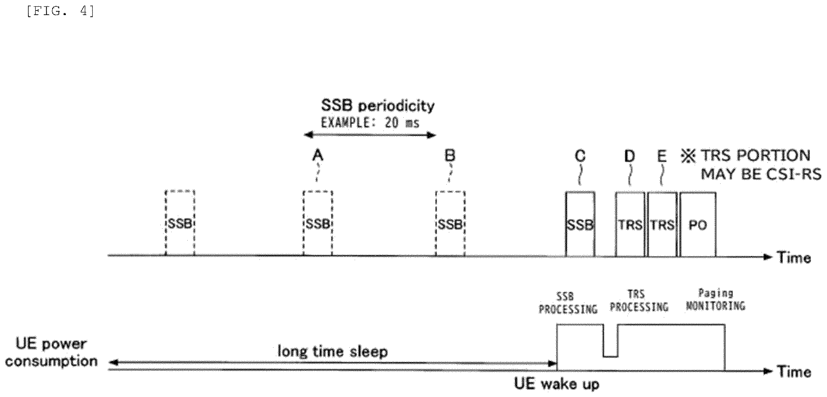

Fig. 4 illustrates an operation example in a case where the terminal 20 (idle/inactive mode UE) uses the TRS for the paging monitoring in a PO by using the above-described information. Fig. 4 illustrates a case of using the TRS as an example, but the CSI-RS may be used instead of the TRS. In Fig. 4, an upper side represents a reception operation of the TRS or the like, and a lower side represents power consumption in the terminal 20.

It is assumed that the terminal 20 knows transmission of a TRS illustrated in D or E in Fig. 4 and timing thereof, a time frequency resource, and the like by the above-described information received from the base station 10.

The terminal 20 sleeps for long time before timing of an SSB indicated by C, and wakes up at timing of an SSB indicated by C. In a case of Fig. 4, since the terminal 20 knows that the TRS can be received at timing of D or C, the terminal 20 does not wake up at timing of an SSB indicated by A as in the case of Fig. 3.

The terminal 20 performs TRS reception at the timing of D or C and performs paging monitoring at the PO. Note that, in the example in Fig. 4, the terminal 20 receives the SSB and the TRS/CSI-RS before the PO and after long time sleep, but the terminal 20 may be set to receive only the TRS/CSI-RS before the PO after the long time sleep.

Hereinafter, an operation example relating to information notification from the base station 20 to the terminal 10 will be described with reference to Examples 1 to 4. Examples 1 to 4 can be carried out in an arbitrary combination.

### (Example 1)

First, Example 1 will be described. In Example 1, the base station 10 notifies the terminal 20 (idle/inactive mode UE) with availability of the TRS/CSI-RS (information indicating whether or not the TRS/CSI-RS is available). Since the terminal 20 can determine whether or not the TRS/CSI-RS is transmitted from the base station 10 on the basis of the availability information received from the base station 10, in a case where the TRS/CSI-RS has been transmitted from the base station 10, the terminal 20 can perform the paging monitoring at the PO by using the TRS/CSI-RS in an operation as illustrated in Fig. 4.

Note that, the notification of availability for the TRS/CSI-RS may be referred to as notification of activation/deactivation of the TRS/CSI-RS. Hereinafter, Example 1-1 and Example 1-2 will be described as a more specific example.

### <Example 1-1>

In Example 1-1, the base station 10 notifies the terminal 20 of information (for example: a time frequency resource position, beam (QCL) information, and the like) necessary for TRS/CSI-RS reception in advance with higher layer signaling. Examples of the higher layer signaling include system information (SIB1, SIB2, or the like), RRC signaling received in a connected mode, and the like.

Then, the base station 10 notifies the terminal 10 of availability of the TRS/CSI-RS with lower layer signaling. Examples of the lower layer signaling include a DCI, a MAC CE, a reference signal, and the like.

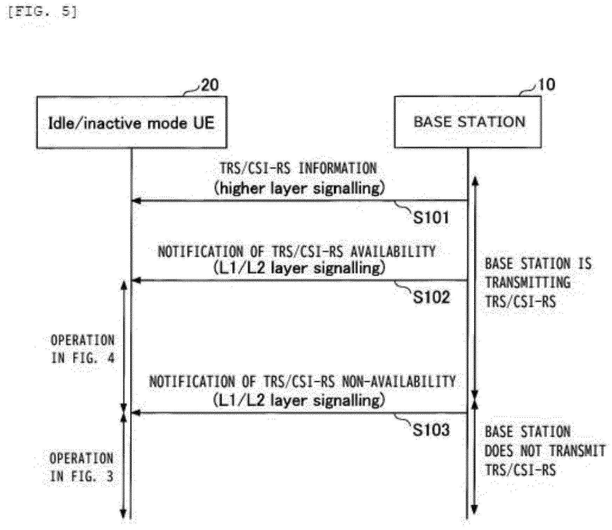

An operation example of Example 1-1 will be described with reference to Fig. 5. In S101, the base station 10 transmits information necessary for the TRS/CSI-RS reception to the terminal 20 (idle/inactive mode UE) with higher layer signaling, and the terminal 20 receives the information.

Note that, S101 may be executed when the terminal 20 is in RRC connection state (connected mode) or in an idle/inactive mode. In a case where S101 is executed for the terminal 20 in the idle/inactive mode, for example, the base station 10 transmits the information at timing at which the terminal 20 discontinuously wakes up, and the terminal 20 receives the information at the timing. The timing may be timing of the PO, or timing other than the PO. This is also true of the higher layer signaling (or semi-static signaling) to be described later.

In S102, the base station 10 transmits information indicating that the TRS/CSI-RS is available (that is, the base station 10 transmits the TRS/CSI-RS) to the terminal 20 with lower layer signaling (L1/L2 signaling), and the terminal 20 receives the information.

It is assumed that S102 is executed for the terminal 20 in the idle/inactive mode. For example, the base station 10 transmits the information at timing at which the terminal 20 intermittently wakes up, and the terminal 20 receives the information at the timing. The timing may be the timing of the PO or may be timing other than PO. This is also true of lower layer signaling or dynamic signaling to be described later.

Since the terminal 20 can determine that the TRS/CSI-RS has been transmitted from the base station 10 due to the information received in S102, the terminal 20 performs the paging monitoring at the PO by using the TRS/CSI-RS based on the information received in S101. That is, for example, the terminal 20 performs the operation illustrated in Fig. 4.

In S103, the base station 10 transmits information indicating that the TRS/CSI-RS cannot be used (that is, the base station 10 stops transmission of the TRS/CSI-RS) to the terminal 20 with lower layer signaling (L1/L2 signaling), and the terminal 20 receives the information.

Since the terminal 20 can determine that the TRS/CSI-RS has not been transmitted from the base station 10 due to the information received in S103, the terminal 20 performs the paging monitoring in the PO without using the TRS/CSI-RS. That is, for example, the terminal 20 performs the operation illustrated in Fig. 3.

Note that, in Example 1-1, it may be assumed that higher layer signaling is not performed by S101. In this case, for example, information (for example: a time frequency resource position, beam (QCL) information, and the like) necessary for TRS/CSI-RS reception is defined by specifications or the like, and thus the terminal 20 and the base station 10 retain the information in advance. The terminal 20 can receive the TRS/CSI-RS by using the information.

### <Example 1-2>

In Example 1-2, the base station 10 notifies the terminal 10 with availability for the TRS/CSI-RS with higher layer signaling.

In Example 1-2, information (for example: a time frequency resource position, beam (QCL) information, and the like) necessary for TRS/CSI-RS reception is defined, for example, by specifications or the like, and thus the terminal 20 and the base station 10 retain the information in advance. The terminal 20 can receive the TRS/CSI-RS by using the information.

Alternatively, the information (for example: a time frequency resource position, beam (QCL) information, and the like) necessary for TRS/CSI-RS reception may be given in notification from the base station 10 to the terminal 20 in combination with information of availability of the TRS/CSI-RS.

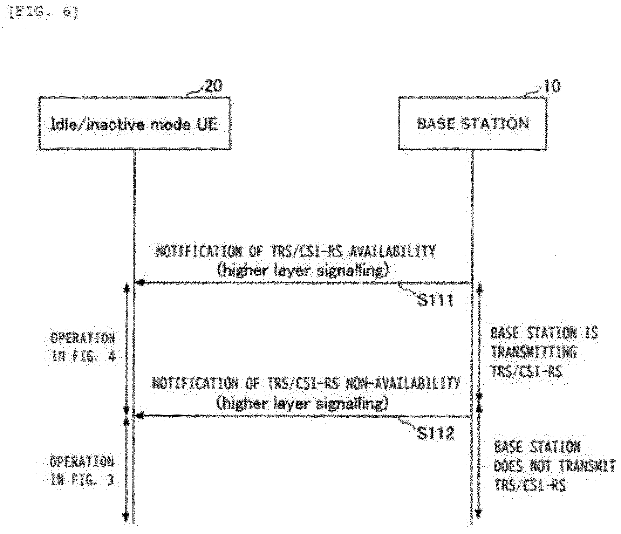

An operation example of Example 1-2 will be described with reference to Fig. 6. In the example illustrated in Fig. 6, it is assumed that the information necessary for the TRS/CSI-RS reception is retained in the terminal 20 and the base station 10 in advance.

In Sill, the base station 10 transmits information indicating that the TRS/CSI-RS is available (that is, the base station 10 transmits the TRS/CSI-RS) to the terminal 20 with higher layer signaling, and the terminal 20 receives the information.

Since the terminal 20 can determine that the TRS/CSI-RS has been transmitted from the base station 10 due to the information received in 5111, the terminal 20 performs the paging monitoring in the PO by using the TRS/CSI-RS on the basis of the retained information. That is, for example, the terminal 20 performs the operation illustrated in Fig. 4.

In S112, the base station 10 transmits information indicating that the TRS/CSI-RS cannot be used (that is, the base station 10 stops transmission of the TRS/CSI-RS) to the terminal 20 with higher layer signaling, and the terminal 20 receives the information.

Since the terminal 20 can determine that the TRS/CSI-RS has not been transmitted from the base station 10 due to the information received in S112, the terminal 20 performs the paging monitoring in the PO without using the TRS/CSI-RS. That is, for example, the terminal 20 performs the operation illustrated in Fig. 3.

According to Example 1, since the terminal 20 can determine whether or not the TRS/CSI-RS is available in the paging monitoring, it is possible to reduce power consumption of the terminal 20.

### (Example 2)

Next, Example 2 will be described. In Example 2, the base station 10 notifies the terminal 20 (idle/inactive mode UE) of availability of the TRS/CSI-RS (information indicating whether or not the TRS/CSI-RS is available) with 1 shot. "1 shot" represents one signaling. Notification of availability of the TRS/CSI-RS may be performed with higher layer signaling, or may be performed with lower layer signaling.

In Example 2, a correspondence relationship between the notification of availability of the TRS/CSI-RS and the PO is defined or given in notification. According to the correspondence relationship, the terminal 20 receives the notification of availability of the TRS/CSI-RS and can determine whether or not the TRS/CSI-RS is available for the paging monitoring in the PO corresponding to the notification.

In addition, in Example 2, a default operation of the terminal 20 (for example: whether or not a UE may be assumed to use the TRS/CSI-RS) when the notification of availability of the TRS/CSI-RS corresponding to an arbitrary PO is not received may be given in notification or defined. Hereinafter, a more specific example of Example 2 will be described with reference to Example 2-1 and Example 2-2.

### <Example 2-1>

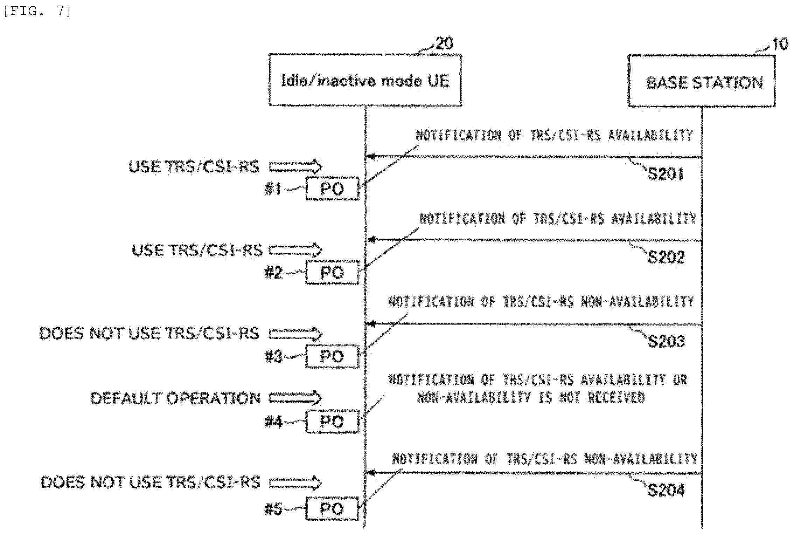

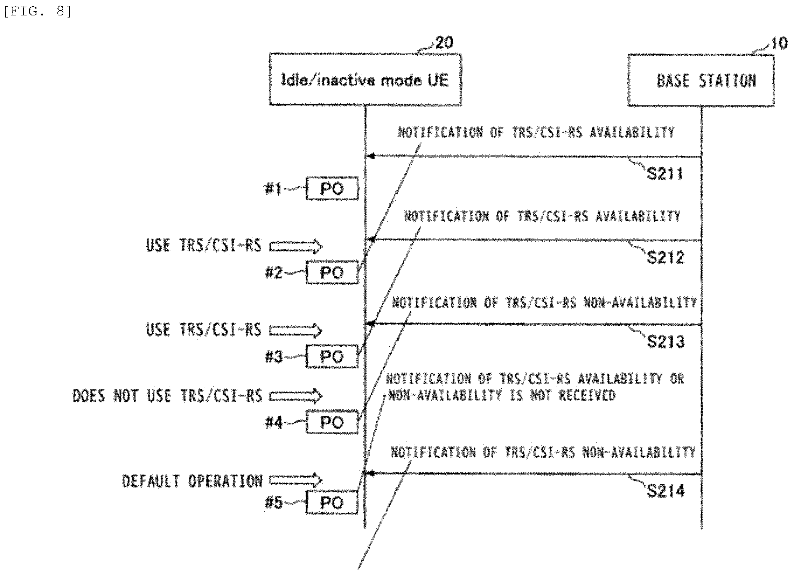

In Example 2-1, a notification is given for each availability of the TRS/CSI-RS corresponding to 1 PO with 1 shot from the base station 10 to the terminal 20. An example will be given described with reference to Fig. 7 and Fig. 8.

Even in any case of Fig. 7 and Fig. 8, information (for example: a time frequency resource position, beam (QCL) information, and the like) necessary for TRS/CSI-RS reception may be defined, for example, in specifications or the like, and the information may be retained in the terminal 20 and the base station 10 in advance or may be given in notification from the base station 10 to the terminal 20 in advance with higher layer signaling. In addition, the information may be given in notification in combination with notification of availability of the TRS/CSI-RS.

In addition, the correspondence relationship between the notification of availability of the TRS/CSI-RS and the PO may be defined in, for example, in specifications or the like, and the correspondence relationship may be retained in the terminal 20 and the base station 10 in advance or may be given in notification from the base station 10 to the terminal 20 in advance with higher layer signaling. In addition, the information indicating the correspondence relationship may be given in notification in combination with the notification of availability of the TRS/CSI-RS.

In addition, for example, the above-described default operation may be defined, for example, in specifications or the like, and the default operation may be retained in the terminal 20 and the base station 10 in advance or may be given in notification from the base station 10 to the terminal 20 in advance with higher layer signaling. In addition, information indicating the default operation may be given in notification in combination with the notification availability of the TRS/CSI-RS.

The information necessary for TRS/CSI-RS reception, the correspondence relationship, and the information on the default operation may be given in notification in advance from the base station 10 to the terminal 20 with higher layer signaling.

First, an example illustrated in Fig. 7 will be described. In S201, the base station 10 transmits information indicating that the TRS/CSI-RS is available to the terminal 20, and the terminal 20 receives the information.

In the example in Fig. 7, "correspondence relationship" represents "notification of availability of the TRS/CSI-RS corresponds to a PO before the subsequent notification of availability of the TRS/CSI-RS from the notification". In Fig. 7, as an example, it is assumed that basically, one PO exists between notification and notification.

Accordingly, when receiving notification in S201, the terminal 20 determines that the TRS/CSI-RS in a period before a PO #1 after the notification in S201 is available for the paging monitoring in the PO #1. That is, the terminal 20 determines that the base station 10 transmits the TRS/CSI-RS in the period. Accordingly, when receiving the notification in S201, the terminal 20 uses the TRS/CSI-RS in the period before the PO #1 after the notification in S201 for the paging monitoring in the PO #1.

This is also true of reception of notification in S202 and paging monitoring in a PO #2.

In S203, the base station 10 transmits information indicating that the TRS/CSI-RS is not available to the terminal 20, and the terminal 20 receives the information. In this case, the terminal 20 does not use the TRS/CSI-RS, that is, the terminal 20 performs the paging monitoring in a PO #3 by the operation illustrated in Fig. 3. This is also true of S204 and a PO #5.

After S203, the terminal 20 does not receive notification at timing of receiving the notification of availability of the TRS/CSI-RS. This may be a case where the base station 10 does not perform transmission of notification, or a case where the base station 10 has transmitted the notification, but radio quality is poor and thus the terminal 20 cannot receive the notification.

When assuming that the default operation in a case of not receiving notification at timing of receiving the notification of availability of the TRS/CSI-RS is "use TRS/CSI-RS", the terminal 20 performs the paging monitoring in a PO #4 by using the TRS/CSI-RS. When assuming that the default operation in a case of not receiving notification at timing of receiving the notification of availability of the TRS/CSI-RS is "do not use TRS/CSI-RS", the terminal 20 performs the paging monitoring in a PO #4 without using the TRS/CSI-RS (for example: the operation in Fig. 3).

Next, an example illustrated in Fig. 8 will be described. In S211, the base station 10 transmits information indicating that the TRS/CSI-RS is available to the terminal 20, and the terminal 20 receives the information.

In the example in Fig. 8, the "correspondence relationship" represents "notification of availability of the TRS/CSI-RS corresponds to a PO before a further subsequent notification of availability of the TRS/CSI-RS from the subsequent notification of the notification".

Accordingly, when receiving notification in S211, the terminal 20 determines that the TRS/CSI-RS is available for the paging monitoring in a PO #2. Accordingly, the terminal 20 uses the TRS/CSI-RS for the paging monitoring in the PO #2. Note that, with respect to the paging monitoring of the PO #1, availability or non-availability of the TRS/CSI-RS has been determined on the basis of the previous notification.

This is also true of reception of notification in S212 and the paging monitoring of a PO #3.

In S213, the base station 10 transmits information indicating that the TRS/CSI-RS is not available to the terminal 20, and the terminal 20 receives the information. In this case, the terminal 20 does not use the TRS/CSI-RS, that is, the terminal 20 performs the paging monitoring in a PO #4, for example, by the operation illustrated in Fig. 3. This is also true of S214 and the subsequent PO.

After S213, the terminal 20 does not receive notification at timing of receiving the notification of availability of the TRS/CSI-RS. This may be a case where the base station 10 does not perform transmission of notification, or a case where the base station 10 has transmitted the notification, but radio quality is poor and thus the terminal 20 cannot receive the notification.

When assuming that the default operation in a case of not receiving notification at timing of receiving the notification of availability of the TRS/CSI-RS is "use TRS/CSI-RS", the terminal 20 performs the paging monitoring in a PO #5 by using the TRS/CSI-RS. When assuming that the default operation in a case of not receiving notification at timing of receiving the notification of availability of the TRS/CSI-RS is "do not use TRS/CSI-RS", the terminal 20 performs the paging monitoring in a PO #5 without using the TRS/CSI-RS (for example: the operation in Fig. 3).

Note that, as described with reference to Fig. 7 and Fig. 8, the correspondence relationship in which a corresponding PO exists between notification and notification is an example. In addition to the correspondence relationship, a direct correspondence relationship between a PO and notification may be defined or given in notification.

For example, the correspondence relationship may be a correspondence relationship in which one PO corresponds to one notification (for example: PO #1-notification #1, PO #2-notification #2, ...). When assuming that this example is used in the example in Fig. 7, for example, information designating the PO #1 may be included in the notification in S201, and information designating the PO #2 may be included in the notification in PS202.

As described above, information that explicitly designates a PO may be included in notification, or information that explicitly designates a PO may not be included. In a case where information that explicitly designates a PO is not included in notification, a resource (a time resource, a frequency resource, or a time-frequency resource) with which the notification is transmitted may be associated with a PO.

### <With Regard to Relationship Between Notification and TRS/CSI-RS>

With regard to notification of availability of the TRS/CSI-RS corresponding to one PO, for example, the availability may be given in notification collectively with respect to a plurality of the TRS/CSI-RSs corresponding to a plurality of beams while corresponding to one PO.

In this case, for example, when assuming that the TRS/CSI-RS is transmitted twice in each of Beam 1 to Beam 4 in a period between the notification in S201 in Fig. 7 and the PO #1, since the terminal 20 can determine that any TRS/CSI-RS among TRS/CSI-RSs transmitted twice in each of Beam 1 to Beam 4 is also transmitted, the terminal 20 may use any TRS/CSI-RS among the TRS/CSI-RSs.

In addition, with regard to notification of availability of the TRS/CSI-RS corresponding to one PO, for example, the notification may correspond to the TRS/CSI-RS of one beam while corresponding to one PO. In this case, availability may be given in notification collectively for a plurality of the TRS/CSI-RSs which are repetitively transmitted with the one beam.

In this case, in the notification in S201 in Fig. 7, for example, information indicating "TRS/CSI-RS of Beam 1 is available" is given in notification with respect to the PO #1. When assuming that the TRS/CSI-RS is transmitted four times with Beam 1 in a period between the notification and the PO #1, since the terminal 20 can determine that any TRS/CSI-RS among the TRS/CSI-RSs transmitted four times with Beam 1 is also transmitted, the terminal 20 may use any TRS/CSI-RS among the TRS/CSI-RSs of Beam 1.

### <Example 2-2>

Next, Example 2-2 will be described. In Example 2-2, availability of the TRS/CSI-RS is given in notification with one shot for every TRS/CSI-RS transmission.

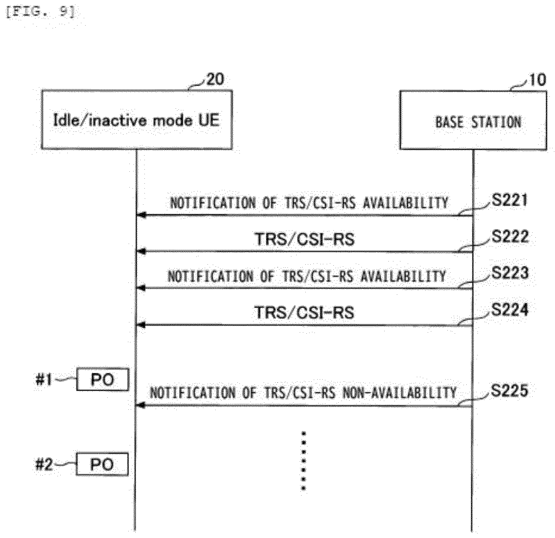

An example will be described with reference to Fig. 9. In S221, the base station 10 transmits information indicating that the TRS/CSI-RS is available to the terminal 20, and the terminal 20 receives the information. In this example, notification of availability of the TRS/CSI-RS corresponds to a TRS/CSI-RS that is transmitted for the first time after the notification. Accordingly, the terminal 20 can use the TRS/CSI-RS that is transmitted in S222 for the paging monitoring in a PO #1. This is also true of S223 and S224.

In S225, the base station 10 transmits information indicating that the TRS/CSI-RS is not available to the terminal 20, and the terminal 20 receives the information. Accordingly, the terminal 20 does not use the TRS/CSI-RS for the paging monitoring in a PO #2. Accordingly, the terminal 20 performs the paging monitoring in the PO #2 by using a SSB in a similar manner as in the operation in Fig. 3.

Note that, a configuration in which notification of availability of the TRS/CSI-RS corresponds to a TRS/CSI-RS that is transmitted for the first time after the notification is illustrative only. The notification may correspond to a TRS/CSI-RS other than the TRS/CSI-RS that is transmitted for the first time after the notification. For example, a flow of notification #1 → notification #2 → TRS #1 → TRS #2 may be employed. In this case, for example, the notification #1 indicating availability of the TRS #1 is transmitted from the base station 10, the notification #2 indicating availability of the TRS #2 is subsequently transmitted, and the terminal 20 receives the notifications and determines that the TRS #1 corresponding to the notification #1 and the TRS #2 corresponding to the notification #2 are available. When assuming that a PO exists immediately after the TRS #2, the terminal 20 can perform the paging monitoring in the PO by using the TRS #1 and the TRS #2 which are received after the notification #2.

According to Example 2, since the terminal 20 can determine whether or not the TRS/CSI-RS is available in the paging monitoring, it is possible to reduce power consumption of the terminal 20. In addition, in Example 2, availability or non-availability of the TRS/CSI-RS can be controlled in a more detail manner.

### (Example 3)

Next, Example 3 will be described. In Example 3, the base station 10 notifies the terminal 20 (idle/inactive mode UE) of availability of the TRS/CSI-RS (information as to whether the TRS/CSI-RS is available) in a semi-static manner. The semi-static notification of availability of the TRS/CSI-RS may be performed with higher layer signaling or may be performed with lower layer signaling.

In Example 3, the default operation of the terminal 20 in a case where availability of the TRS/CSI-RS is not given in notification (for example: whether or not a UE may be assumed to use the TRS/CSI-RS) may be given in notification or defined.

Even in Example 3, information (for example: a time frequency resource position, beam (QCL) information, and the like) necessary for TRS/CSI-RS reception may be defined, for example, in specifications or the like, and the information may be retained in the terminal 20 and the base station 10 in advance or may be given in notification from the base station 10 to the terminal 20 in advance with higher layer signaling in a similar manner as in the example illustrated in Fig. 5. In addition, the information may be given in notification in combination with notification of availability of the TRS/CSI-RS.

In addition, the above-described default operation may be defined, for example, in specifications or the like, and the default operation may be retained in the terminal 20 and the base station 10 in advance or may be given in notification from the base station 10 to the terminal 20 with higher layer signaling. In addition, the information may be given in notification in combination with availability of the TRS/CSI-RS.

The information necessary for TRS/CSI-RS reception and the information of the default operation may be given in notification from the base station 10 to the terminal 20 in advance in combination with the notification of availability of the TRS/CSI-RS.

Hereinafter, a more specific example of Example 3 will be described with reference to Example 3-1 and Example 3-2.

### <Example 3-1>

In Example 3-1, until switching of availability of the TRS/CSI-RS is given in notification, an operation in notification before the notification is applied.

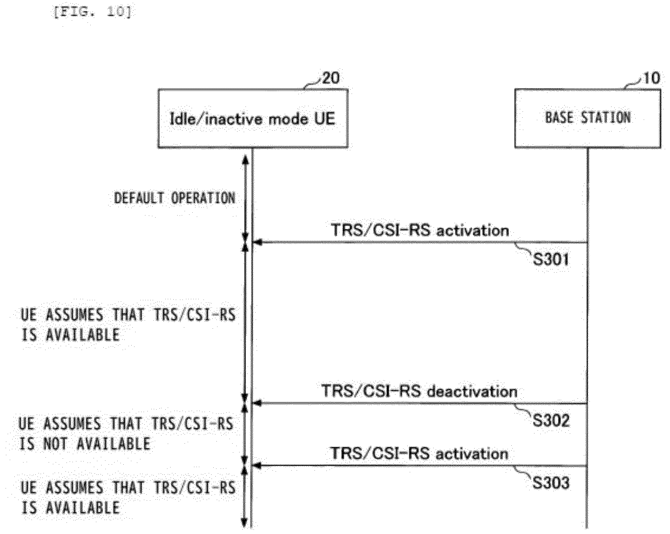

Example 3-1 will be described in more detail with reference to Fig. 10. In S301, the base station 10 transmits TRS/CSI-RS activation (notification of availability) to the terminal 20. The terminal 20 receives the activation. In S302, the base station 10 transmits TRS/CSI-RS deactivation (notification of non-availability) to the terminal 20. The terminal 20 receives the deactivation.

The terminal 20 assumes that the TRS/CSI-RS is available for the paging monitoring in a PO until receiving the deactivation in S302 after receiving the activation in S301. Accordingly, in this period, when a PO exists, the TRS/CSI-RS is used for the paging monitoring of the PO.

In S302, the base station 10 transmits TRS/CSI-RS deactivation (notification of non-availability) to the terminal 20. The terminal 20 receives the deactivation. In S303, the base station 10 transmits TRS/CSI-RS activation (notification of availability) to the terminal 20. The terminal 20 receives the activation.

The terminal 20 assumes that the TRS/CSI-RS is not available for the paging monitoring in a PO until receiving the activation in S303 after receiving the deactivation in S302. Accordingly, in this period, even when a PO exists, the TRS/CSI-RS is not used for the paging monitoring of the PO.

### <Example 3-2>

In Example 3-2, in a case where availability of the TRS/CSI-RS is not given in notification for a constant period, availability of the TRS/CSI-RS is switched from a state in the previous notification. For example, a timer is used to measure the constant period. For example, in a case where the TRS/CSI-RS activation or the TRS/CSI-RS deactivation is not given in notification after the TRS/CSI-RS activation is given in notification for a period measured by the timer, the terminal 20 switches a state, and sets the TRS/CSI-RS to deactivation (non-availability).

A value of the timer may be defined, for example, in specifications or the like, and the value may be retained in the terminal 20 and the base station 10 in advance or may be given in notification from the base station 10 to the terminal 20 in advance with higher layer signaling or the like. In addition, the value of the timer may be given in notification in combination with the TRS/CSI-RS activation or the TRS/CSI-RS deactivation.

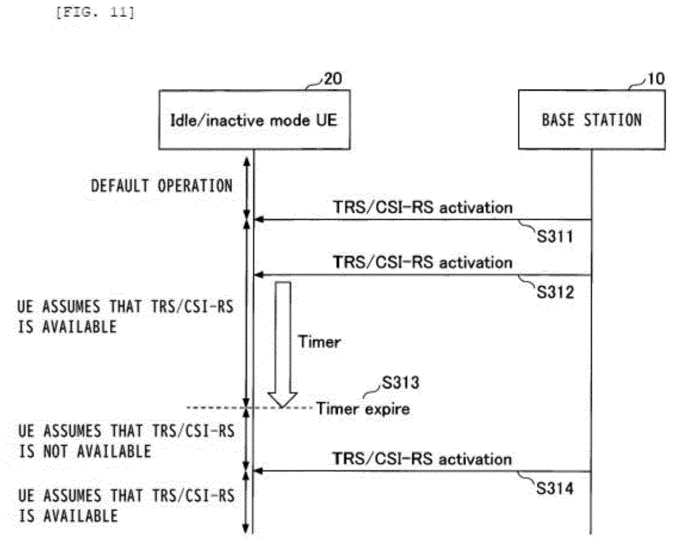

Example 3-2 will be described in more detail with reference to Fig. 11. In S311, the base station 10 transmits TRS/CSI-RS activation (availability notification) to the terminal 20. The terminal 20 initiates the timer after receiving the activation.

In S311, when receiving the TRS/CSI-RS activation from the base station 10 before expiration of the timer, the terminal 20 reactivates (resets and initiates) the timer.

Then, the timer in S313 expires without receiving any of activation and deactivation. In a period from S311 to S313, the terminal 20 can use the TRS/CSI-RS.

In S313, the terminal 20 switches a state of availability or non-availability of the TRS/CSI-RS from activation to deactivation. In S314, the terminal 20 receives TRS/CSI-RS activation from the base station 20. In a period from S313 to S314, the terminal 20 assumes that the TRS/CSI-RS is not available. Until the timer expires after S314 (or until receiving deactivation), the terminal 20 assumes that the TRS/CSI-RS is available.

According to Example 3, in the paging monitoring, since the terminal 20 can determine whether or not the TRS/CSI-RS is available, it is possible to reduce power consumption of the terminal 20. In addition, in Example 3, control using the timer is possible, and thus signaling can be reduced.

### (Example 4)

Next, Example 4 will be described. Example 4 is applicable to any of Example 1 to Example 3.

In Example 4, a period or the number of times of application of the TRS/CSI-RS availability is given in notification from the base station 10 to the terminal 20. The TRS/CSI-RS availability may represent that the TRS/CSI-RS is available or the TRS/CSI-RS is not available.

More specifically, examples of the contents of the notification include a period in which the TRS/CSI-RS availability is applied (for example, Xms, Yslot, or the like), the number of times of application (the number of times of TRS/CSI-RS occasion, or the number of times of PO) and the like.

With regard to a notification method, for example, the period in which the TRS/CSI-RS availability is applied or the number of times of application thereof is given in notification in advance from the base station 10 to the terminal 20 with higher layer signaling.

In addition, a period in which the TRS/CSI-RS availability is applied or the number of times of application thereof may be given in notification from the base station 10 to the terminal 20 when the TRS/CSI-RS availability is given in notification. That is, in this case, the application period or the number of times of application is given in notification when the TRS/CSI-RS availability is given in notification.

As an example, in S102 in Fig. 5, when assuming that "Yslot" is given in notification from the base station 10 to the terminal 20 in combination with notification indicating that the TRS/CSI-RS is available, the terminal 20 uses the TRS/CSI-RS for the paging monitoring in a PO in a period from a point of time of S102 to Yslot.

According to Example 4, in the paging monitoring, since the terminal 20 can grasp whether or not the TRS/CSI-RS is available on the basis of the number of times or the period, and the power consumption of the terminal 20 can be reduced.

### (Apparatus Configuration)

Next, description will be given of a functional configuration example of the base station 10 and the terminal 20 which execute the above-described processing and operations. The base station 10 and the terminal 20 are provided with functions for carrying out Example 1 to Example 4 described above. However, the base station 10 and the terminal 20 may be provided with functions of any one example among Example 1 to Example 4.

### <Base Station 10>

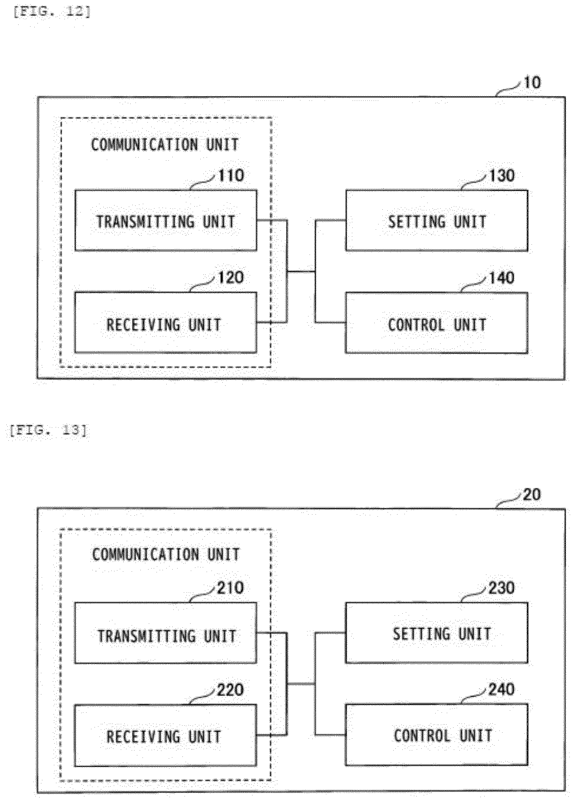

Fig. 12 is a view illustrating an example of a functional configuration of the base station 10. As illustrated in Fig. 12, the base station 10 includes a transmitting unit 110, a receiving unit 120, a setting unit 130, and a control unit 140. The functional configuration illustrated in Fig. 12 is illustrative only. A functional classification or the name of the functional units may be arbitrarily set as long as the operation according to this embodiment of the invention can be executed. The transmitting unit 110 and the receiving unit 120 may be referred to as a communication unit.

The transmitting unit 110 includes a function of generating a signal that is transmitted to the terminal 20 side and wirelessly transmitting the signal. The receiving unit 120 includes a function of receiving various signals transmitted from the terminal 20, and acquiring, for example, information of a higher layer from the received signals. In addition, the transmitting unit 110 has a function of transmitting NR-PSS, NR-SSS, NR-PBCH, DL/UL control signals, DL data, and the like to the terminal 20. In addition, the transmitting unit 110 transmits the notification described in Examples 1 to 4 to the terminal 20.

The setting unit 130 stores setup information that is set in advance and various pieces of setup information transmitted to the terminal 20 in a storage device, and reads out the various pieces of setup information from the storage device as necessary.

For example, the control unit 140 performs resource allocation, control of the entirety of the base station 10, and the like. Note that, a functional unit relating to signal transmission in the control unit 140 may be included in the transmitting unit 110, and a functional unit relating to signal reception in the control unit 140 may be included in the receiving unit 120. In addition, the transmitting unit 110 and the receiving unit 120 may be referred to as a transmitter and a receiver, respectively.

### <Terminal 20>

Fig. 13 is a view illustrating an example of a functional configuration of the terminal 20. As illustrated in Fig. 13, the terminal 20 includes a transmitting unit 210, a receiving unit 220, a setting unit 230, and a control unit 240. The functional configuration illustrated in Fig. 13 is illustrative only. A functional classification or the name of the functional units may be arbitrarily set as long as the operation according to this embodiment of the invention can be executed. The transmitting unit 210 and the receiving unit 220 may be referred to as a communication unit.

The transmitting unit 210 creates a transmission signal from transmission data, and wireless transmits the transmission signal. The receiving unit 220 wirelessly receives various signals, and acquires signals of a higher layer from a received physical layer signal.

The setting unit 230 stores various pieces of setup information received from the base station 10 by the receiving unit 220 in a storage device, and reads out the various pieces of setup information from the storage device as necessary. In addition, the setting unit 230 also stores setup information that is set in advance. For example, the contents of the setup information are information received with higher layer signaling described in Examples 1 to 4.

The control unit 240 performs control of the paging monitoring in a PO on the basis of the information received from the base station 10. For example, the control unit 240 determines whether or not to perform the paging monitoring in the PO, for example, by using the TRS/CSI-RS. Note that, a functional unit relating to signal transmission in the control unit 240 may be included in the transmitting unit 210, and a functional unit relating to signal reception in the control unit 240 may be included in the receiving unit 220. In addition, the transmitting unit 210 and the receiving unit 220 may be referred to as a transmitter and a receiver, respectively.

According to the examples, at least, a terminal, a base station, and a paging method described, for example, in respective items described below are provided,
(First Item) A terminal including:
   a receiving unit that receives notification indicating whether or not a reference signal is available to perform paging monitoring in paging occasion from a base station; and
   a control unit that performs the paging monitoring on the basis of the notification.
(Item 2) The terminal according to Item 1,
   wherein the receiving unit receives information necessary for reception of the reference signal from the base station with higher layer signaling.
(Item 3) The terminal according to Item 1 or 2,
   wherein the notification is associated with the paging occasion, and in a case where the receiving unit does not receive the notification, the control unit executes a default operation in paging occasion corresponding to the notification.
(Item 4) The terminal according to any one of Items 1 to 3,
   wherein when the receiving unit receives a first notification indicating whether or not the reference signal is available to perform the paging monitoring in paging occasion, the control unit activates a timer, and in a case where the timer expires before receiving a second notification, the control unit switches a state of availability or non-availability of the reference signal based on the first notification.
(Item 5) A base station including:
   a control unit that performs control as to whether or not to transmit a reference signal; and
   a transmitting unit that transmits notification indicating whether or not a reference signal is available to perform paging monitoring in paging occasion to the terminal.
(Item 6) A paging method executed by a terminal, including:
   receiving notification indicating whether or not a reference signal is available to perform paging monitoring in paging occasion from a base station; and
   performing the paging monitoring on the basis of the notification.

According to any one of Items 1 to 6, power consumption in a terminal can be reduced in the paging monitoring.

### (Hardware Configuration)

The block diagrams (Fig. 12 and Fig. 13) which are used in description of the embodiment illustrate blocks in a function unit. The function blocks (constituent units) are realized by an arbitrary combination of at least one of hardware and software. In addition, means for realizing respective function blocks is not particularly limited. That is, the respective function blocks may be realized by one device that is physically or logically combined. In addition, two or more devices, which are physically or logically separated from each other, may be directly or indirectly connected (for example, in a wired manner, a wireless manner, or the like), and the respective function blocks may be realized by a plurality of the devices. The function blocks may be realized by combining software to the one device or the plurality of devices.

Examples of functions include determining, calculating, computing, processing, deriving, examining, searching, confirming, receiving, transmitting, outputting, accessing, solving, selecting, establishing, comparing, assuming, expecting, regarding, broadcasting, notifying, communicating, forwarding, configuring, reconfiguring, allocation (mapping), assigning, and the like, but there is no limitation thereto. For example, a function block (constituent unit) that realizes a transmission function is referred to as a transmitting unit or a transmitter. A realization method of any of the functions is not particularly limited as described above.

For example, any of the base station 10, the terminal 20, and the like in the embodiment of the present disclosure may function as a computer that performs processing of a radio communication method of the present disclosure. Fig. 19 is a view illustrating an example of a hardware configuration of the base station 10 and the terminal 20 according to the embodiment of the present disclosure. The base station 10 and the terminal 20 may be configured as a computer device that physically includes a processor 1001, a storage device 1002, an auxiliary storage device 1003, a communication device 1004, an input device 1005, an output device 1006, a bus 1007, and the like.

Note that, in the following description, a term "apparatus" may be read as a circuit, a device, a unit, or the like. The hardware configuration of the base station 10 and the terminal 20 may include the respective devices illustrated in the drawing one by one or in a plural number, or may not include a part of the devices.

Respective functions in the base station 10 and the terminal 20 are realized by loading predetermined software (program) on hardware such as the processor 1001 and the storage device 1002 so as to allow the processor 1001 to perform an arithmetic operation, and by controlling communication with the communication device 1004 or by controlling at least one of reading-out and writing of data in the storage device 1002 and the auxiliary storage device 1003.

For example, the processor 1001 allows an operating system to operate so as to control the entirety of the computer. The processor 1001 may be constituted by a central processing unit (CPU) that includes an interface with a peripheral device, a control device, an arithmetic operation device, a register, and the like. For example, the control unit 140, the control unit 240, and the like may be realized by the processor 1001.

In addition, the processor 1001 reads out a program (a program code), a software module, data, or the like from at least one of the auxiliary storage device 1003 and the communication device 1004 into the storage device 1002, and performs various kinds of processing according to the program, the software module, the data, or the like. As the program, a program that causes the computer to execute at least a part of the operations described in the embodiment is used. For example, the control unit 140 of the base station 10 illustrated in Fig. 12 may be realized by a control program that is accommodated in the storage device 1002 and operates by the processor 1001. In addition, for example, the control unit 240 of the terminal 20 illustrated in Fig. 13 may be realized by a control program that is accommodated in the storage device 1002 and operates by the processor 1001. The above-described various kinds of processing have been described to be executed by one processor 1001, but may be simultaneously or sequentially executed by two or more processors 1001. The processor 1001 may be mounted by one or more chips. Furthermore, the program may be transmitted from a network through electric communication line.

The storage device 1002 is a computer-readable recording medium, and may be constituted by, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (main storage device), or the like. The storage device 1002 can retain a program (a program code), a software module, and the like which can be executed to carry out the communication method according to the embodiment of the present disclosure.

The auxiliary storage device 1003 is a computer-readable recording medium, and may be constituted by, for example, at least one of an optical disc such as a compact disc ROM (CD-ROM), a hard disk drive, a flexible disk, a magneto-optical disk (for example, a compact disk, a digital multi-purpose disk, and a Blu-ray (registered trademark) disk), a smart card, a flash memory (for example, a card, a stick, a key drive), a floppy (registered trademark) disk, a magnetic strip, and the like. The auxiliary storage device 1003 may be referred to as an auxiliary storage device. For example, the above-described storage medium may be a database including at least one of the storage device 1002 and the auxiliary storage device 1003, a server, and other appropriate media.

The communication device 1004 is hardware (transmitting and receiving device) that performs communication between computers through at least one of a wired network and a wireless network, and may be referred to as, for example, a network device, a network controller, a network card, a communication module, or the like. For example, the communication device 1004 may include a highfrequency switch, a duplexer, a filter, a frequency synthesizer, and the like to realize at least one of frequency division duplex (FDD) and time division duplex (TDD). For example, a transmitting and receiving antenna, an amplification unit, a transmitting and receiving unit, a transmission path interface, and the like may be realized by the communication device 1004. The transmitting and receiving unit may be mounted in a state of being physically or logically separated into a transmitting unit and a receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. Note that, the input device 1005 and the output device 1006 may have an integral configuration (for example, a touch panel).

In addition, respective devices such as the processor 1001 and the storage device 1002 are connected to each other through a bus 1007 for information communication. The bus 1007 may be configured by using a single bus, or by using buses different between devices.

In addition, the base station 10 and the terminal 20 may include hardware such as a microprocessor, a digital signal processor (DSP), an application specific integrated circuit (ASIC), a programmable logic device (PLD), and a field programmable gate array (FPGA), or a part or the entirety of respective function blocks may be realized by the hardware. For example, the processor 1001 may be mounted by using least one piece of hardware.

### (Supplement of Embodiment)

Hereinbefore, description has been given of the embodiment of the invention. However, the disclosed invention is not limited to the embodiment, and it should be understood by those skilled in the art that various modification examples, various variation examples, various alternative examples, various substitution examples, and the like can be made. Description has been made by using a specific numerical example for comprehension of the invention, but numerical values are illustrative only, and arbitrary appropriate values may be used unless otherwise stated. The classification of the items in the above description is not essential in the invention, and details described in two or more items may be used in combination as necessary. In addition, details described in any item may be applied to details described in a different item (as long as inconsistency does not occur). It cannot be said that the boundary of the function units in the functional block diagrams or the processing units corresponds to a boundary of physical components. Operations of a plurality of function units may be performed physically with one component, or an operation of one function unit may be performed physically with a plurality of components. With regard to the procedures described in the embodiment, the order thereof may be changed as long as inconsistency does not occur. The base station 10 and the terminal 20 have been described by using functional block diagrams for convenience of processing explanation, but the devices may be realized by hardware, software, or a combination thereof. Software that operates by the processor provided to the base station 10 in accordance with the embodiment of the invention, and software that operates by the processor provided to the terminal 20 in accordance with the embodiment of the invention may be respectively stored in a random access memory (RAM), a flash memory, a read only memory (ROM), an EPROM, an EEPROM, a register, a hard disk drive (HDD), a removable disk, a CD-ROM, a database, a server, or other appropriate storage media.

In addition, information notification may be performed by other methods without limitation to the aspect and the embodiment described in the present disclosure. For example, the information notification may be performed by physical layer signaling (for example, downlink control information (DCI), and uplink control information (UCI)), higher layer signaling (for example, radio resource control (RRC) signaling, medium access control (MAC) signaling, notification information (master information block (MIB)), and system information block (SIB)), other signals, or a combination thereof. In addition, the RRC signaling may be referred to as an RRC message, and examples thereof include an RRC connection setup message, an RRC connection reconfiguration message, and the like.

The aspect and embodiment which are described in the present disclosure may also be applied to at least any one of long term evolution (LTE), LTE-Advanced (LTE-A), SUPER 3G, IMT-Advanced, 4th generation mobile communication system (4G), 5th generation mobile communication system (5G), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), other systems which use an appropriate system, and a next generation system that is extended on the basis of the systems. In addition, application can be made in combination of a plurality of the systems (for example, in combination of at least one of LTE and LTE-A, and 5G).

With regard to the procedure, the sequence, the flowchart, and the like in the aspect and the embodiment which are described in this specification, the order thereof may be changed as long as inconsistency does not occur. For example, with regard to the method that is described in the present disclosure, elements of various steps are suggested in an exemplary order, and there is no limitation to the specific order that is suggested.

In this specification, a specific operation that is performed by the base station 10 may be performed by a higher node (upper node) according to circumstances. In a network including one or a plurality of network nodes including the base station 10, it is apparent that various operations which are performed for communication with the terminal 20 can be performed by at least one of the base station 10 and another network node (for example, MME, S-GW (golden week), or the like is considered, but there is no limitation thereto) other than the base station 10. In the above description, a case where another network node other than the base station 10 is one is exemplified, but the other network node may be a combination (for example, MME and S-GW (golden week)) of a plurality of other network nodes.

The information, the signal, and the like which are described in the present disclosure may be output from a higher layer (or a lower layer) to the lower layer (or the higher layer). The information, the signal, and the like may be input or output through a plurality of network nodes.

Information that is input or output, and the like may be stored in a specific location (for example, a memory), or may be managed by a management table. The information that is input or output, and the like may be subjected to rewriting, updating, or additional writing. The information that is output, and the like may be deleted. The information that is input, and the like may be transmitted to other devices.

Determination in the present disclosure may be performed by a value (0 or 1) that is expressed by one bit, may be performed in accordance with a truth value (Boolean: true or false), or may be performed through numerical value comparison (for example, comparison with a predetermined value).

Even when being referred to as software, firmware, middleware, microcode, hardware description language, or other names, the software should be broadly interpreted to mean instructions, instruction sets, codes, code segments, program codes, programs, subprograms, software modules, applications, software applications, software packages, routines, subroutines, objects, executable files, execution threads, procedures, functions, and the like.

In addition, the software, instructions, information, and the like may be transmitted or received through a transmission medium. For example, in a case where the software is transmitted from a web site, a server, or other remote sources by using at least one of a wired technology (a coaxial cable, an optical fiber cable, a twisted pair, a digital subscriber line (DSL), or the like) and a wireless technology (infrared, microwave, or the like), at least one of these wired and wireless technologies is included in the definition of the transmission medium.

The information, the signals, and the like, which are described in the present disclosure, may be expressed by using any one of other various technologies. For example, data, an instruction, a command, information, a signal, a bit, a symbol, a chip, and the like, which are stated over the entirety of the above description, may be expressed by a voltage, a current, an electromagnetic wave, a magnetic field or a magnetic particle, a photo field or a photon, or an arbitrary combination thereof.

Note that, terms described in the present disclosure and terms necessary for understanding of the present disclosure may be substituted with terms having the same or similar meaning. For example, at least one of the channel and the symbol may be a signal (signaling). In addition, the signal may be a message. In addition, the component carrier (CC) may be referred to as a carrier frequency, a cell, a frequency carrier, or the like.

The terms of "system" and "network" used in the present disclosure are compatibly used.

In addition, information, parameters, and the like which are described in the present disclosure may be expressed by using absolute values, may be expressed by using relative values from predetermined values, or may be expressed by using additional corresponding information. For example, the radio resource may be indicated by an index.

The names used for the above-described parameters are not restrictive in any way. In addition, mathematical formulas and the like using these parameters may be different from those explicitly disclosed in the present disclosure. Since various channels (for example, a PUSCH, a PUCCH, a PDCCH, and the like) and information elements can be identified by any suitable name, the various names allocated to these various channels and information elements are not limited names in any way.

In the present disclosure, terms such as a "base station (BS)", a "radio base station", a "base station", a "fixed station", a "NodeB", an "eNodeB (eNB)", a "gNodeB (gNB)", an "access point", a "transmission point", a "reception point", a "transmission and reception point", a "cell", a "sector", a "cell group", a "carrier", and a "component carrier" may be compatibly used. The base station may also be referred to as terms such as a macro cell, a small cell, a femto cell, and a pico cell.

The base station can accommodate one or a plurality of (for example, three) cells. In a case where the base station accommodates the plurality of cells, the entirety of a coverage area of the base station can be classified into a plurality of small areas, and each of the small areas can provide a communication service by a base station subsystem (for example, an indoor small base station (remote radio head (RRH)). A term of a "cell" or a "sector" represents a part or the entirety of a coverage area of at least one of the base station and the base station subsystem which provide the communication service in the coverage.

In the present disclosure, the terms such as a "mobile station (MS)", a "user terminal", a "user equipment (UE)", and a "terminal" can be compatibly used.

The mobile station may be defined by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or several other appropriate terminologies.

At least one of the base station and the mobile station may be referred to as a transmission device, a reception device, a communication device, or the like. Note that, at least one of the base station and the mobile station may be a device mounted on a moving body, the moving body itself, or the like. The moving body may be a vehicle (for example, a car, an airplane, or the like), an unmanned moving body (for example, a drone, an automatic driving vehicle, or the like), or a robot (a manned type or an unmanned type). Note that, at least one of the base station and the mobile station includes a device that does not necessarily move during a communication operation. For example, at least one of the base station and the mobile station may be an Internet of thing (IoT) device such as a sensor.

In addition, the base station in the present disclosure may be read as a terminal. For example, the aspect/embodiment of the present disclosure may be applied to a configuration in which the communication between the base station and the terminal is substituted with communication between a plurality of terminals 20 (for example, may be referred to as a device-to-device (D2D), vehicle-to-everything (V2X), or the like). In this case, a function provided to the base station 10 may be set to a configuration of the terminal 20. In addition, words such as "up" and "down" may be read as words (for example, "side") corresponding to communication between terminals. For example, an uplink channel, a downlink channel, and the like may be read as a side channel.

Similarly, the terminal in the present disclosure may be read as a base station. In this case, the function provided in the terminal may be set as a configuration of the base station.

The term "determining" that is used in the present disclosure may include various operations. For example, the term "determining" may include regarding of judging, calculating, computing, processing, deriving, investigating, looking up (search, inquiry) (for example, looking up in a table, a database, or other data structures), or ascertaining as "determined", and the like. In addition, the "determining" may include regarding of receiving (for example, information receiving), transmitting (for example, information transmitting), input, output, or accessing (for example, accessing to data in a memory) as "determined", and the like. In addition, "determining" may include regarding of resolving, selecting, choosing, establishing, comparing, or the like as "determining". That is, "determining" includes regarding of any operation as "determined". In addition, "determining" may be read as "assuming", "expecting", "considering", or the like.

A term of "connected", "coupled", or any variation thereof represents any direct or indirect connection or coupling between two or more elements and can include presence of one or more intermediate elements between two "connected" or "coupled" elements. The coupling or connection between the elements may be physical, logical, or a combination thereof. For example, "connection" may be read as "access". In a case of being used in the present disclosure, it can be considered that the two elements are "connected" or "coupled" to each other by using at least one of one or more wires, a cable, and printed electrical connection, and by using electromagnetic energy having a wavelength in a radio frequency domain, a microwave domain, and an optical (both visible and invisible) domain as several non-limiting and non-inclusive examples.

A reference signal may be abbreviated as RS (reference signal), and may be referred to as a pilot in accordance with an applied standard.

Description of "on the basis of" in the present disclosure does not represent "only on the basis of" unless otherwise stated. In other words, description of "on the basis of" represents both "only on the basis of" and "at least on the basis of".

Any reference to elements which use a term such as "first" and "second" in the present disclosure does not generally limit the amount or the sequence of the elements. These terms can be used in the present disclosure as a convenient method of distinguishing two or more elements. Accordingly, reference to the first and second elements does not mean that only two elements can be employed, or that the first element must precede the second element in some way.

The "unit" in the configuration of each of the devices may be substituted with "portion", "circuit", "device", or the like.

In the present disclosure, in a case where "include", "including", and a modification thereof are used, these terms are intended as comprehensive terms similar to "comprising". In addition, a term "or" that is used in the present disclosure is not intended as an exclusive-OR.

A radio frame may be configured by one or a plurality of frames in a time domain. The one or the plurality of frames in the time domain may be referred to as a subframe. The subframe may be further configured by one or a plurality of slots in the time domain. The subframe may be a fixed time length (for example, 1 ms) that does not depend on numerology.

The numerology may be a communication parameter that is applied to at least one of transmission and reception of an arbitrary signal or channel. For example, the numerology may represent at least one of a subcarrier spacing (SCS), a bandwidth, a symbol length, a cyclic prefix length, a transmission time interval (TTI), the number of symbols per the TTI, a radio frame configuration, specific filtering processing performed by a transceiver in a frequency domain, specific window INGNI processing performed by the transceiver in the time domain, and the like.

The slot may be configured by one or a plurality of symbols (orthogonal frequency division multiplexing (OFDM) symbols, single carrier frequency division multiple access (SC-FDMA) symbols, or the like) in a time domain. The slot may be a time unit based on the numerology.

The slot may include a plurality of mini slots. Each of the mini slots may be configured by one or a plurality of symbols in the time domain. In addition, the mini slot may be referred to as a sub-slot. The mini slot may be configured by symbols in a number smaller in comparison to the slot. A PDSCH (or a PUSCH) that is transmitted in a time unit greater than the mini slot may be referred to as a PDSCH (or PUSCH) mapping type A. The PDSCH (or PUSCH) transmitted by using the mini slot may be referred to as a PDSCH (or PUSCH) mapping type B.

Any of the radio frame, the subframe, the slot, the mini slot, and the symbol represent a time unit when transmitting signals. With regard to the radio frame, the subframe, the slot, the mini slot, and the symbol, additional names corresponding thereto may be used.

For example, one subframe may be referred to as a transmission time interval (TTI), a plurality of continuous subframes may be referred to as the TTI, or one slot or one mini slot may be referred to as the TTI. That is, at least one of the subframe and the TTI may be a subframe (1 ms) in existing LTE, may be a period (for example, 1 to 13 symbols) shorter than 1 ms, or may be a period longer than 1 ms. Note that, a unit indicating the TTI may be referred to as a slot, a mini slot, or the like instead of the subframe.

Here, for example, the TTI represents a minimum time unit of scheduling in the radio communication. For example, in an LTE system, the base station performs scheduling for allocating a radio resource (a frequency bandwidth, transmission power, or the like that can be used in each terminal 20) to each terminal 20 in a TTI unit. Note that, definition of the TTI is not limited thereto.

The TTI may be a transmission time unit such as a channel encoded data packet (transport block), a code block, and a codeword, or may be a processing unit of scheduling, link, and adaptation. Note that, when the TTI is given, the time interval (for example, the number of symbols) in which the transport block, the code block, the codeword, or the like is actually mapped may be shorter than the TTI.

Note that, in a case where one slot or one mini slot is referred to as the TTI, one or more TTIs (that is, one or more slots or one or more mini slots) may be the minimum time unit of the scheduling. In addition, the number of slots (the number of mini slots) constituting the minimum time unit of the scheduling may be controlled.

The TTI having a time length of 1 ms may be referred to as a typical TTI (TTI in LTE Rel. 8-12), a normal TTI, a long TTI, a typical subframe, a normal subframe, a long subframe, a slot, or the like. A TTI shorter than the typical TTI may be referred to as a shortened TTI, a short TTI, a partial TTI (or fractional TTI), a shortened subframe, a short subframe, a mini slot, a subslot, a slot, or the like.

Note that, the long TTI (for example, the typical TTI, the subframe, and the like) may be read as a TTI having a time length longer than 1 ms, and the short TTI (for example, the shortened TTI and the like) may be read as a TTI having a TTI length that is less than the TTI length of the long TTI and equal to or greater than 1 ms.

The resource block (RB) is a resource allocation unit of the time domain and the frequency domain and may include one subcarrier or a plurality of continuous subcarriers in the frequency domain. The number of subcarriers included in the RB may be the same regardless of the numerology, and may be, for example, 12. The number of subcarriers included in the RB may be determined on the basis of the numerology.

In addition, the time domain of the RB may include one or a plurality of symbols, and may be a length of one slot, one mini slot, one subframe, or one TTI. The one TTI, the one subframe, and the like may be configured one or a plurality of resource blocks.

Note that, one or a plurality of RBs may be referred to as a physical resource block (PRB: physical RB), a sub-carrier group (SCG), a resource element group (REG), a PRB pair, an RB pair, or the like.

In addition, the resource block may be configured by one or a plurality of resource elements (REs). For example, 1 RE may be a radio resource domain of one subcarrier and one symbol.

A bandwidth part (BWP) (may be referred to as a partial bandwidth or the like) may represent a subset of continuous common resource blocks (RB) which are continuous for an arbitrary numerology in an arbitrary carrier. Here, the common RB may be specified by an index of an RB with a common reference point of the carrier set as a reference. The PRB may be defined by an arbitrary BWP, and may be numbered in the BWP.

The BWP may include BWP for UL (UL BWP) and BWP for DL (DL BWP). With respect to the UE, one or a plurality of BWPs may be set in one carrier.

At least one of the BWPs which are set may be active, and the UE may not assume that a predetermined signal/channel is transmitted and received at the outside of the active BWP. Note that, "cell", "carrier", and the like in the present disclosure may be read as "BWP".

The structure of the radio frame, the subframe, the slot, the mini slot, the symbol, and the like is illustrative only. For example, the configuration of the number of subframes included in the radio frame, the number of slots per the subframe or the radio frame, the number of the mini slots included in the slot, the number of symbols and RBs included in the slot or the mini slot, the number of subcarriers included in the RB, the number of symbols in the TTI, the symbol length, the cyclic prefix (CP) length, and the like can be changed in various manners.

In the present disclosure, for example, in a case where articles such as "a", "an", and "the" are added in translation, nouns subsequent to the articles are intended to include a plural form.

In the present disclosure, a term of "A and B are different" may represent "A and B are different from each other". Note that, the term may represent "A and B are different from C". Terms such as "separated" and "coupled" may be interpreted in the same manner as in "different".

The aspect and the embodiment which are described in the present disclosure may be used alone or in combination thereof, or may be switched and used in accordance with execution. In addition, notification of predetermined information (for example, notification of "a fact of X") is not limited to the explicit notification, and may be performed in an implicit manner (for example, notification of the predetermined information is not performed).

Note that, in the present disclosure, the SS block or the CSI-RS is an example of a synchronization signal or a reference signal.

Hereinbefore, the present disclosure has been described in detail, but it is apparent by those skilled in the art that the present disclosure is not limited to the embodiment described in the present disclosure. The present disclosure can be executed as a variation aspect and a modification aspect without departing from the gist and the scope of the present disclosure which are determined by description of the appended claims. Accordingly, description in the present disclosure is made for exemplary explanation, and does not have any limiting meaning with respect to the present disclosure.

### EXPLANATIONS OF LETTERS OR NUMERALS

- 10: BASE STATION
- 110: TRANSMITTING UNIT
- 120: RECEIVING UNIT
- 130: SETTING UNIT
- 140: CONTROL UNIT
- 20: TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal comprising:
a receiving unit that receives notification indicating whether or not a reference signal is available to perform paging monitoring in paging occasion from a base station; and
a control unit that performs the paging monitoring on the basis of the notification.

2. The terminal according to claim 1,
wherein the receiving unit receives information necessary for reception of the reference signal from the base station with higher layer signaling.

3. The terminal according to claim 1 or 2,
wherein the notification is associated with the paging occasion, and in a case where the receiving unit does not receive the notification, the control unit executes a default operation in paging occasion corresponding to the notification.

4. The terminal according to any one of claims 1 to 3,
wherein when the receiving unit receives a first notification indicating whether or not the reference signal is available to perform the paging monitoring in paging occasion, the control unit activates a timer, and in a case where the timer expires before receiving a second notification, the control unit switches a state of availability or non-availability of the reference signal based on the first notification.

5. A base station comprising:
a control unit that performs control as to whether or not to transmit a reference signal; and
a transmitting unit that transmits notification indicating whether or not a reference signal is available to perform paging monitoring in paging occasion to the terminal.

6. A paging method executed by a terminal, comprising:
receiving notification indicating whether or not a reference signal is available to perform paging monitoring in paging occasion from a base station; and
performing the paging monitoring on the basis of the notification.
